# EUROPÄISCHE PATENTANMELDUNG

(11) **EP 0 922 981 A2**
(43) Veröffentlichungstag der Anmeldung: **16.06.1999**
(21) Anmeldenummer: 98121441.4
(22) Anmeldetag: 11.11.1998
(51) Int. Cl.: G02B 7/00

(54) **Verbundener Körper**

(30) Priorität: 13.12.1997 DE 19755482
(71) Anmelder: Carl Zeiss, 89518 Heidenheim (Brenz) (DE); Carl-Zeiss-Stiftung trading as Carl Zeiss, 89518 Heidenheim (Brenz) (DE)
(72) Erfinder: Hangleiter, Christof, 89568 Hermaringen (DE); Trier, Bernhard, 73430 Aalen (DE); Trunz, Michael, 73479 Ellwangen (DE)

(57) **Zusammenfassung**

Die Erfindung betrifft einen verbundenen Körper, welcher zumindest aus zwei Körpern zusammengefügt ist und wobei der erste Körper aus einem ersten Material und der zweite Körper aus einem zweiten Material besteht. Jeder der beiden Körper verfügt über mindestens eine Verbindungsfläche, wobei sich die Verbindungsflächen gegenüberliegen. Die beiden Verbindungskörper sind dabei an mindestens einer Verbindungsfläche aneinandergesprengt.

Erfindungsgemäß sind auf mindestens einer der beiden Verbindungsflächen, welche mittels Ansprengung miteinander verbunden werden, eine oder mehrere Ausnehmungen für eine Klebestelle bzw. Klebespalt angebracht, wobei ein Kleber für eine zusätzliche Klebeverbindung der beiden Verbindungsflächen an der Klebestelle zwischen den beiden Körpern sorgt, und diese Ausnehmungen der Klebestelle liegen zumindest im wesentlichen in der Ansprengfläche.

## Beschreibung

Die Erfindung betrifft einen verbundenen Körper, welcher zumindest aus zwei Körpern zusammengefügt ist und wobei der erste Körper aus einem ersten Material und der zweite Körper aus einem zweiten Material besteht, wobei jeder der beiden Körper über mindestens eine Verbindungsfläche verfügt, wobei sich die Verbindungsflächen gegenüberliegen und wobei beide Verbindungskörper an mindestens einer Verbindungsfläche aneinandergesprengt sind.

Bei gewissen Anwendungen (insbesondere bei der Herstellung von größeren Körpern aus mehreren Einzelkörpern) darf der herzustellende Körper nach der Herstellung (vorzugsweise an seinen verspiegelten Flächen, an Meßflächen oder an Auflageflächen für andere Bauteile) nur minimale Deformationen (der erlaubt Deformationsbereich liegt dabei im Nanometerbereich) aufweisen. Dabei ist nicht nur die Größe des herzustellenden Körpers sondern insbesondere auch seine Form relevant (insbesondere inneren Kanten). Die Verwendung dieser Körper erfolgt bevorzugt in Bereichen, in denen Nanometer eine relevante Größe sind (z B. Mikroskopie, Astronomie, usw.).

Aus dem Stand der Technik der Feinfügetechnik sind im wesentlichen zwei Methoden bekannt, um zwei Körper fest miteinander zu verbinden:
a) Beim Ansprengen werden optische Oberflächen durch die van der Waalsschen Kräfte miteinander verbunden. Dabei wird das Ansprengen hauptsächlich für kraftschlüssige, vorübergehende Verbindungen in der Fertigung verwendet.
   Nachteilig bei diesem Verfahren ist, daß sich zwei durch Ansprengung verbundene Teile leicht durch entsprechende, die Verbindungskanten benetzende Flüssigkeiten lösen lassen. Auch ist die Ansprengung nicht unbedingt erschütterungsfest.
   In der Produktion wird das Ansprengen als dauerhafte Verbindung für kleine optische Elemente mit mm-Abmessungen verwendet. Große Elemente mit cm-Abmessungen können so nicht, mit der für eine dauerhafte Verbindung nötigen Sicherheit verbunden werden.
   Zur Verbesserung und Sicherung der Ansprengung kann mittels Sicherungslack und/oder Kittraupe außerhalb der Ansprengflächen die Beständigkeit der Verbindung vergrößert, jedoch nicht perfektioniert werden.
b) Beim spannungsarmen Kleben werden die Klebestellen üblicherweise durch geschickte Gestaltung der Klebestellen (Optimierung des Klebespaltes und der Klebepads) optimiert. Bei dieser Optimierung werden grundlegende Vorgaben (Klebespalt 1/10 mm, Pads 6x6 mm) gemäß dem Stand der Technik berücksichtigt.
   Geklebte Teile haben den großen Nachteil, daß nicht unbedingt eine kraft- und formschlüssige Verbindung möglich ist. Das unvermeidbare Kriechen der Verbindung, und die damit verbundene Dejustierung der Teile zueinander, erzeugt ebenfalls in manchen Anwendungen entsprechende Probleme.

Aus der DE 37 11 466 ist eine Vorrichtung zur Verbindung von mindestens zwei Körpern bekannt, bei welcher mittels eines Zugankers miteinander verbunden werden, ohne daß thermische Zwangskräfte auftreten. Diese Vorrichtung hat den Nachteil, daß die beiden Körper nach der Verbindung nachgearbeitet werden müssen, da der Zuganker an den Verbindungsflächen starke Kräfte erzeugt. Dafür ist die Verbindung sehr stabil.

Aus der DE 39 34 546 ist ein Vorrichtung zur klebenden Verbindung zweier Körper mittels eines Zwischenstücke bekannt, wobei aber die Zwischenstücke bis an die Oberflächen der beiden Körper geführt sind und die Oberfläche in ihrem Bereich nicht genutzt werden kann.

Es ist die Aufgabe der Erfindung, eine Verbindung zwischen größeren Körpern, insbesondere mit niedrigem thermischen Ausdehnungskoeffizienten (z.B. Silikat, Keramik, Invar, usw.) zu entwickeln, die hinreichend prozeßsicher und kraftschlüssig ist sowie Toleranzforderungen im nm-Bereich erfüllt.

Diese Aufgabe wird durch den kennzeichnenden Teil des ersten Patentanspruchs gelöst.

Eine Kombination der beiden nach dem Stand der Technik beschriebenen Verbindungstechniken wurde bisher noch nicht realisiert und ist auch nicht naheliegend, da beide Verbindungsarten seit langem bekannt sind und sich bisher eher ausgeschlossen haben.

Die Neuheit und die Erfindungshöhe sind jedoch nicht nur in der bloßen Kombination der Verbindungstechniken zu sehen, sondern in der Tatsache, daß die durch den Schrumpf des Klebers entstehende Kraft zur Verbesserung der Ansprengung verwendet wird, jedoch kaum zu Verformungen der verbundenen Körper führt.

Dabei kann eine geschickte Form der Klebestelle sowie eine geschickte Auswahl der Anordnung der Klebestelle innerhalb der Ansprengfläche die vorteilhafte Kombination der beiden Verbindungstypen unterstützen.

Mit der neuen Verbindung ist es möglich, optische Elemente mit großen Abmessungen, d.h. größer als 10 cm form- und kraftschlüssig miteinander zu verbinden. (Es fanden Versuche statt, bei welchen die zu verbindenden Flächen eine Längenausdehnung von mehr als 40 cm hatten.) Das Kriechen des Klebers entfällt; dieses wird durch die Ansprengungen verhindert. Die nötige Festigkeit wird durch die Klebestellen sichergestellt.

Auf Grund der geringen Deformationen der verbundenen Körper durch die Verklebung eignet sich der Einsatz insbesondere in optischen Geräten, welche mit kleinen Wellenlängen arbeiten. Hier sei beispielhaft ein Positioniertisch (mit Bewegungen auf der X-, Y- und manchmal auch in Z-Achse) genannt, wie er insbesondere in UV-Mikroskopen benötigt wird.

Die Erfindung wird im folgenden anhand eines Ausführungsbeispiels unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in
- Figur 1: einen Schnitt durch die beiden erfindungsgemäß miteinander verbundenen Teile;
- Figur 2: eine Aufsicht auf die beiden Körper aus Figur 1;
- Figur 3: eine dreidimensionale Darstellung der Klebstelle im Inneren der beiden Körper;
- Figur 4: eine Aufsicht auf die Klebstelle;
- Figur 5: einen seitlichen Schnitt durch die Klebstelle;
- Figur 6: eine Aufsicht auf eine Variation der in Figur 4 dargestellten Klebfläche; und
- Figur 7: eine Frontalansicht des Ausgasungskanals aus Figur 6.

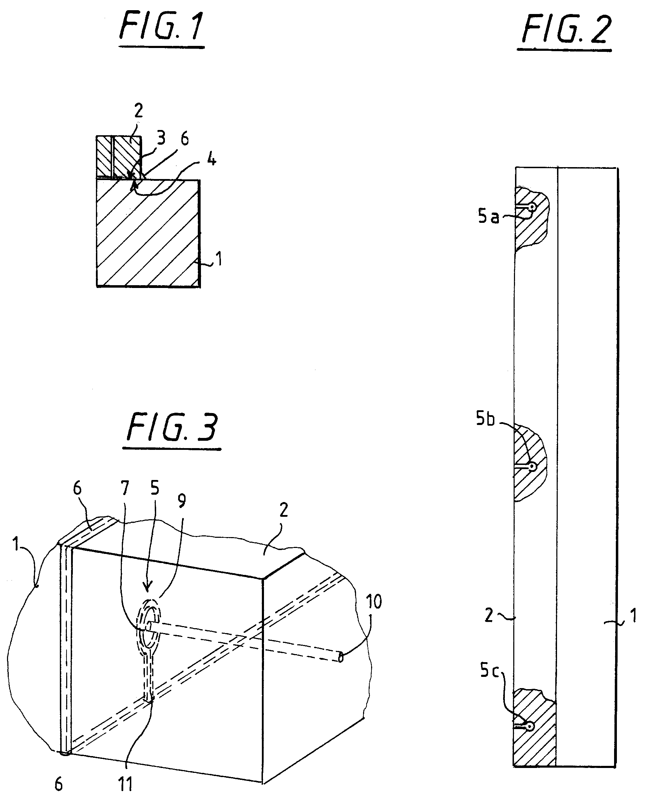

In der Figur 1 sind zwei Körper (1, 2) im Schnitt XX dargestellt, welche erfindungsgemäß miteinander verbunden sind; in Figur 2 ist ein Aufsichtschnitt YY derselben Körper (1, 2) dargestellt.

Beide Körper (1, 2) sind aus ein und demselben Material und bestehen aus demselben Material (wobei als Materialien insbesondere Silikate, Keramiken (z.B. Zerodur) und Metalle (z.B. Invar) mit niedrigem thermischen Ausdehnungskoeffizienten geeignet sind).

Die beiden Körper (1, 2) liegen plan auf ihren beiden Kontakt- bzw. Verbindungsflächen (3, 4) auf, wobei die beiden Kontaktflächen (3, 4) so präzise bearbeitet sind, daß sie durch Ansprengung miteinander verbunden werden konnten. Man kann sie somit auch als Ansprengflächen (3, 4) bezeichnen. Innerhalb der Ansprengfläche (3, 4) sind Klebestellen bzw. Klebepads (5a, 5b, 5c, 7) angeordnet, um eine Verbesserung der Haftung zwischen den beiden Körpern (1, 2) zu erreichen.

Um die Ansprengflächen (3, 4) herum ist eine Klebenut (6) angeordnet, welche eine äußere Benetzung der Ansprengkanten verhindern soll. Diese Klebenut (6) ist dabei nur an den Ansprengkanten angebracht, an welchen sie keine Behinderung bei der späteren Nutzung der verbundenen Körper (1, 2) darstellt.

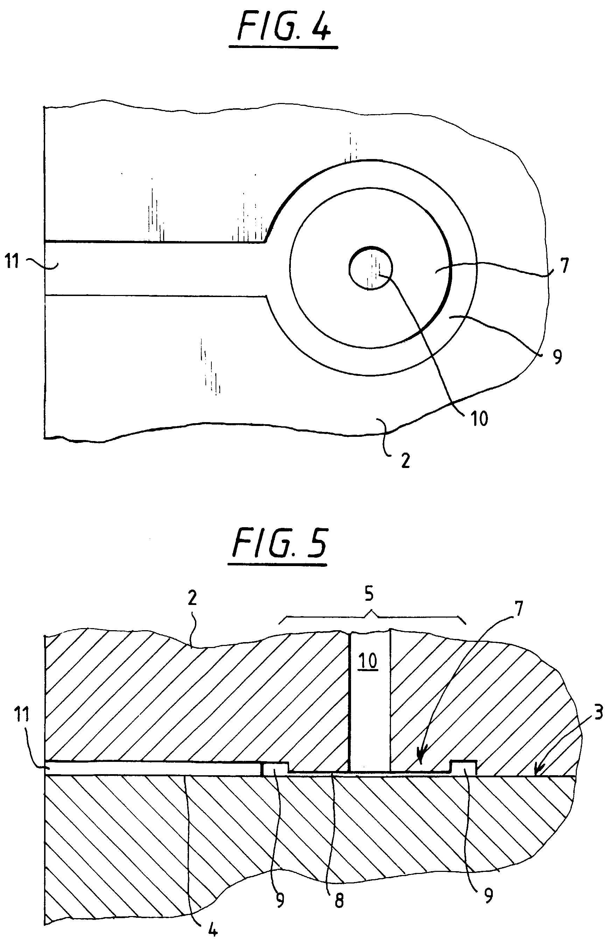

In den Figuren 3 bis 5 ist eine dieser Klebestellen (5) nun im Detail dargestellt.

Eine Klebestelle (5) besteht aus einer planen Fläche (4) mit einer Gegenfläche (3), in welche alle zur Klebung benötigten Aussparungen eingearbeitet sind.

Diese Aussparungen sind insbesondere eine flache kreisförmige Klebepad (7) mit einem definierten Klebespalt (8), welche von einem größeren kreisringförmigen Freischnitt (9) zur Begrenzung des Klebespaltes (8) umgeben ist. Durch diesen Freischnitt (9) kann der Kleber, welcher sich in dem Klebespalt (8) durch Kapillarkräfte ausbreitet, auf den Bereich dieses Klebespaltes (8) begrenzt werden. In dem Klebepad (7), vorzugsweise in ihrem Mittelpunkt, endet ein kreiszylinderförmiger Kanal (10) zur Einbringung des Klebers unter Überdruck. An den Freischnitt (9) schließt sich ein rechteckförmiger Kanal (11) zur Entgasung der bei der Aushärtung des Klebers entstehenden Gase an.

Dieser Klebereinbringungskanal (10) sollte so kurz wie möglich sein, damit der benötigte Überdruck bei der Einbringung des Klebers nicht zu hoch sein muß. Außerdem kann durch Anlegen eines Unterdrucks am Kanal (11) der benötigte Überdruck am anderen Kanal (10) reduziert werden.

Hat man einen 0,1 mm dicken Klebespalt (8) von 6 mm Durchmesser, so sollte der Freischnitt (9) einen um 2 mm größeren Durchmesser besitzen und möglichst dicker als 0,5 mm sein. Das Volumenverhältnis von Klebestelle (5) zu Freischnitt (9) beträgt dann rund 1:4, wobei ein Wert von 1:3 nicht unterschritten werden sollte.

Der Freischnitt (9) wird in diesem Beispiel zu rund 69 % von der Ansprengfläche (3, 4) umschlossen, da der Entgasungskanal (11) in den Freischnitt (9) endet. Der Entgasungskanal (11) selber ist wieder bis zu seinem Austritt aus den beiden Körpern (1, 2) beidseitig von den Ansprengflächen (3, 4) umschlossen.

Der rechteckförmiger Kanal (11) zur Entgasung der bei der Aushärtung des Klebers entstehenden Gase sollte die doppelte Breite des Freischnitts (9) haben und genauso hoch sein. Bei seiner Dimensionierung muß aber auch seine Länge berücksichtigt werde, um eine gute Entgasung sicherzustellen. Er kann kleiner gewählt werden, wenn die Klebestelle (5) nahe am Rand der beiden zu verbindenden Körper (1, 2) angeordnet ist und muß größer gewählt werden, wenn sich die Klebestelle (5) weiter im Inneren der beiden Körper (1, 2) befindet.

Der kreiszylinderförmige Kanal (10) zur Einbringung des Klebers hat in dem hier dargestellten Beispiel einen Radius von einem Viertel des Radius des Klebepads (7) (wobei seine Dimensionierung auch in Abhängigkeit von der Viskosität des verwendeten Klebers zu wählen ist) und sollte möglichst kurz sein.

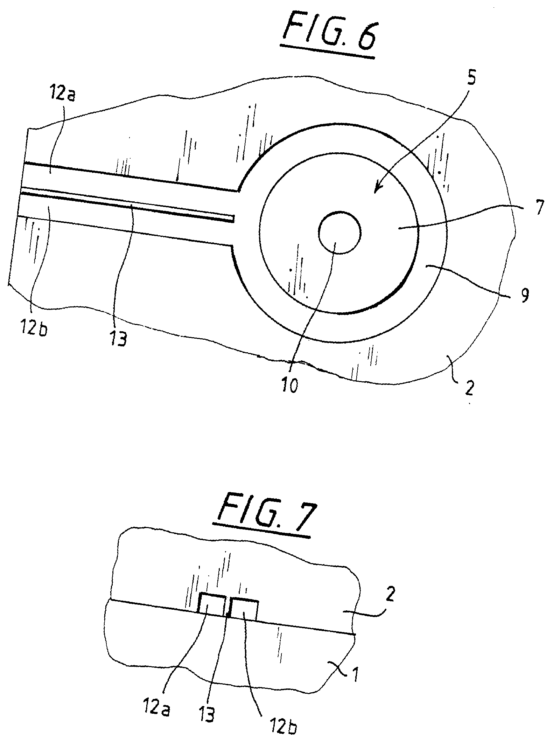

Um den rechteckförmigen Kanal (11) zur Entgasung der bei der Aushärtung des Klebers nicht zu groß werden zu lassen, wenn die Klebestelle (5) sehr weit im Inneren der beiden zu verbindenden Körper (1, 2) befindet, kann man den Kanal modifizieren, wie dies in den Figuren 6 und 7 dargestellt ist.

Indem man in der Mitte des Kanals (11') eine Trennwand (13) einfügt, erzeugt man zwei Kanäle (12a, 12b), welche in den Freischnitt (9) enden. In den einen Kanal (12a) kann man dann ein Gas (z.B. Luft) einblasen, welches durch den anderen Kanal (12b) entweichen kann. Somit erzeugt man eine gerichtete Gasströmung um den Klebepad (7) im Freischnitt (9), wodurch die Größe des Entgasungskanals (11') auch bei sehr großer Länge in vertretbaren Grenzen gehalten werden kann.

Zur Erhöhung der Klebefestigkeit kann eine oder alle beide sich gegenüberliegenden Flächen des Klebepads (7) leicht angerauht sein. Ob dies sinnvoll ist, hängt auch von der Viskosität des verwendeten Klebers und der Klebespaltdicke bzw. -breite ab, da der Kleber ja den ganzen Klebepad (7) bis zum Freischnitt (9) ausfüllen soll.

Verwendet man einen UV-härtenden Kleber, so kann es sinnvoll sein, die Wände des Entgasungskanals (11, 11') und des Freischnitts (9) zumindest teilweise zu verspiegeln, um durch den Entgasungskanal (11, 11') zusätzlich UV-Licht an den Klebepad (7) zu bringen.

Theoretisch ist es möglich, auf den Kanal (10) zur Einbringung des Klebers zu verzichten, wenn man einen Kleber nimmt, welcher nach der Einbringung erst durch äußere Einwirkung (z.B. Erwärmung, Einstrahlung von UV-Licht, usw.) eine Aushärtung, gegebenenfalls unter Volumenvergrößerung des Klebers, erfährt. Der richtige Klebeprozeß wird dann zeitverzögert ausgelöst. Dabei ist aber die Mengendosierung des Klebers sehr kritisch.

Wenn bei diesem Prozeß keine Ausgasung des Klebers erfolgt, kann man auch auf den Kanal (11, 11') zur Entgasung der Klebestelle (5) verzichten. Tritt keine Volumenänderung bei der Aushärtung des Klebers ein, so könnte theoretisch auch auf den umlaufenden Freischnitt (9) verzichtet werden.

Wenn die beiden zu verbindenden Körper (1, 2) nicht aus demselben Material bestehen, so ist bei der Materialauswahl insbesondere deren thermischer Ausdehnungskoeffizient zu berücksichtigen. Als Materialien zur Ausführung der Erfindung kommen wie bereits erwähnt insbesondere Keramik- oder Glasmaterialien in Frage.

Für die Festigkeit der Verbindung zwischen den beiden Körpern (1, 2) ist insbesondere die Plazierung des Klebepads (7) innerhalb der Ansprengfläche (3, 4) wichtig. Besonders vorteilhaft ist auch der flache Entgasungskanal (11, 11') (welcher eine gute Entgasung sicherstellt) sowie der runde Kanal (10) zum Einbringen des Klebers (welcher der Einbringung des Klebers einen kleinstmöglichen Widerstand entgegenbringt).

Das runde Klebepad (7) mit einer Kanalöffnung in seiner Mitte sorgt für einen sauberen Fluß des Klebers sowie für eine spannungsarme Klebestelle. Zur Minimierung der Verformungen der zu verbindenden Körper sind die Klebestellen vorzugsweise in Höhe des Schubmittelpunktes zu plazieren.

Die Ausnehmungen zur Durchführung der Verklebung sind in dem obigen Beispiel nur auf einer der Kontaktflächen eingearbeitet, da dies fertigungstechnisch einfacher ist. Selbstverständlich könnte ein Teil der Ausnehmungen auch auf der gegenüberliegenden Kontaktfläche eingearbeitet sein.

In dem Ausführungsbeispiel muß der Übergang zwischen dem zweiten Körper (2) und dem ersten Körper (1) (d.h. die innere Kante) exakt rechtwinklig sein, da die erste vertikale freistehende Wand des zweiten Körpers (2) verspiegelt ist und zur Positionsvermessung des zusammengefügten Körpers (1, 2) dient.

Nun ist es aber fertigungstechnisch unmöglich, einen exakten inneren rechten Winkel an einem homogenen Körper herzustellen. Deshalb besteht der herzustellende Körper aus zwei einzelnen Körpern (1, 2), welche zu einem einzigen Teil zusammengefügt werden. Auf den Fügeflächen (Verbindungsflächen) (3, 4) befinden sich die insbesondere in den Figuren 3 bis 5 beschriebenen Klebestellen (dort mit 5 gekennzeichnet). Der so entstandene Körper (1, 2) zeichnet sich durch eine sehr hohe Formgenauigkeit bei gleichzeitiger hoher Belastbarkeit gegenüber Schüben aus.

Bei dem vorab beschriebenen Körper (1, 2) handelt es sich um die Auflageplatte (1) für einen X-Y-Z-Positioniertisch, welcher in Mikroskopen eingesetzt wird, welche Strahlungen im UV-Bereich zur Kontrolle der zu begutachtenden Teile einsetzen. Derartige Positioniertische mit ihren Auflageplatten (1) müssen im höchsten Maße formstabil sein und gleichzeitig eine hohe Festigkeit besitzen, welche schnelle Bewegungen des Tisches insbesondere bei einer Automatisierung der Kontrollaufgaben erlaubt.

Bei all den in den Figuren dargestellten Skizzen ist zu berücksichtigen, daß dort nicht die richtigen Größenverhältnisse dargestellt sind. Insbesondere alle Klebespalte sind sehr viel kleiner als dargestellt, da der Kleber durch die Kapillarkraft in diese Klebespalte hineinfließen soll und ein Klebespalt somit eine Breite von wenigen Zehntel Millimetern nicht überschreiten darf.

Durch entsprechende Auswahl des Klebers mit einer möglichst geringen Schrumpfung (kleiner 10 %, besser kleiner 3 % und noch besser kleiner 1 % bzw. kleiner 0,6 %) kann man die gewünschte Kräftereduzierung unterstützen. Als Kleber eignen sich alle Kleber, welche eine möglichst geringe Schrumpfung aufweisen und welche eine sichere Verklebung mit dem Material der zu verbindenden Körper ermöglichen. Für die bevorzugten Materialien Silikat und Keramik sind dies insbesondere Epoxi-Kleber mit einer Schrumpfung von kleiner 3 % oder kleiner 0,6 %.

Der Kleberzuführungskanal sollte nach der Durchführung der Verklebung vorzugsweise möglichst kleberfrei sein.

Die Klebestellen in den Ansprengflächen zwischen den beiden zu verbindenden Körpern dienen nicht primär der Verbindung der beiden zu verbindenden Körper miteinander, sondern stellen vielmehr eine Sicherung der Ansprengung bei starken Beschleunigungen bzw. deren Änderung sicher. Ihre Haltekraft muß also insbesondere erst dann voll wirksam werden, wenn sich die zu verbindenden Körper an ihren Verbindungsflächen voneinander lösen wollen. Dies kann je nach der Geometrie des verbundenen Körpers und zur Lage der Verbindungsflächen relativ zu der bzw. den Beschleunigungsrichtungen unterschiedlich schnell erfolgen.

Bei dem in den Figuren 1 bis 7 dargestellten Beispiel kann der Freischnitt auch in dem einen Körper und die Ausnehmung zur Erzeugung des Klebespaltes im gegenüberliegenden Körper ausgebildet werden.

Diese Modifikationen haben aber den Nachteil, daß eine genauere Justierung der beiden zu verbindenden Körper zueinander bei der Ansprengung erfolgen muß. In Sonderfällen könnte aber auch diese Lösung vorteilhaft sein.

Selbstverständlich könnte der Kleberzuführungskanal auch durch den anderen der zu verbindenden Körper den Klebespalt heranführen und der Entlüftungskanal im Inneren des Körpers, weit weg von den Verbindungsflächen angeordnet sein. Aus Gründen der thermischen Stabilität sollten alle Bestandteile des verbundenen Körpers aus nur einem Material bestehen. Zur Positionsvermessung des verbundenen Körpers können Teile seiner Oberfläche verspiegelt sein.

Anstatt die beiden Körper an ihren beiden Verbindungsflächen direkt miteinander zu verbinden, kann auch eine Aushöhlung zwischen den beiden Körpern an den Klebestellen vorgesehen werden, in welchem ein dritter Körper zwischen den zu verbindenden Körper die Verbindung übernimmt. Dieser dritte Körper (ggf. mit kleinerem Elastizitätsmodul) kann in einer Achse senkrecht oder parallel zu den Verbindungsflächen an den zu verbindenden Körpern angeklebt werden, wobei auch hier bei Bedarf jeweils ein Kanal zur Kleberzuführung und zum Druckausgleich verwendet werden.

## Patentansprüche

1. Verbundener Körper, welcher zumindest aus zwei Körpern (1, 2) zusammengefügt ist und wobei der erste Körper (1) aus einem ersten Material und der zweite Körper (2) aus einem zweiten Material besteht, wobei jeder der beiden Körper (1, 2) über mindestens eine Verbindungsfläche (3, 4) verfügt, wobei sich die Verbindungsflächen (3, 4) gegenüberliegen und wobei beide Verbindungskörper (1, 2) an jeweils mindestens einer Verbindungsfläche (3, 4) aneinandergesprengt sind, dadurch gekennzeichnet, daß auf mindestens einer der beiden Verbindungsflächen (3, 4), welche mittels Ansprengung miteinander verbunden werden, eine oder mehrere Ausnehmungen für eine Klebestelle bzw. Klebespalt (5) angebracht sind, wobei ein Kleber für eine zusätzliche Klebeverbindung der beiden Verbindungsflächen (3, 4) an der Klebestelle (5) zwischen den beiden Körpern (1, 2) sorgt, und daß diese Ausnehmungen der Klebestelle (5) zumindest im wesentlichen in der Ansprengfläche (3, 4) liegend sind.

2. Verbundener Körper nach Anspruch 1, dadurch gekennzeichnet, daß die Klebestellen (5) nicht vollständig in der Ansprengfläche (3, 4) liegend sind.

3. Verbundener Körper nach Anspruch 1 oder 2, dadurch gekennzeichnet, daß ein erster Kanal (10) zur Einbringung des Klebers in der Klebestelle (5) endet.

4. Verbundener Körper nach Anspruch 1 bis 3, dadurch gekennzeichnet, daß ein zweiter Kanal (11, 11') eine Luftverbindung bis zur nach der Ansprengung anzuklebenden Klebestelle (5) besitzt und daß der zweite Kanal (11, 11') zum Entlüften der Klebestelle (5) dient.

5. Verbundener Körper nach Anspruch 3, dadurch gekennzeichnet, daß der erste Kanal (10) kreisförmig ist.

6. Verbundener Körper nach Anspruch 4, dadurch gekennzeichnet, daß der zweite Kanal (11, 11') rechteckförmig ist.

7. Verbundener Körper nach einem der Ansprüche 1 bis 6, dadurch gekennzeichnet, daß die Ansprengflächen (3, 4) von einem zusätzlichen Klebekanal (6) abgeschlossen sind, welcher auf den beiden Körpern (1, 2) um die Kante der Ansprengflächen (3, 4) oder in einer Nut zwischen den beiden Körpern (1, 2) an den Ansprengflächen (3, 4) angeordnet ist.

8. Verbundener Körper nach einem der Ansprüche 1 bis 7, dadurch gekennzeichnet, daß die Ansprengflächen (3, 4) die Klebestelle (5) möglichst vollständig umschließen, zumindest jedoch mehr als 50 %, vorzugsweise mehr als 60 % und weiterhin vorzugsweise mehr als 65 %.

9. Verbundener Körper nach einem der Ansprüche 1 bis 8, dadurch gekennzeichnet, daß die Klebestelle (5) in Höhe des Schubmittelpunktes der beiden Körper (1, 2) plaziert sind.

10. Verbundener Körper nach einem der Ansprüche 1 bis 9, dadurch gekennzeichnet, daß die Klebestelle (5) einen inneren flachen kreiszylinderförmigen Klebebereich (7) aufweist und um diesen inneren Klebebereich (7) ein sie umschließender äußerer kreiszylinderringförmigen Freischnitt (9) angeordnet ist.

11. Verbundener Körper nach Anspruch 10, dadurch gekennzeichnet, daß der zweite Kanal (11, 11') bis zum Freischnitt (9) um den Klebebereich (7) geführt ist.

12. Verbundener Körper nach Anspruch 11, dadurch gekennzeichnet, daß der zweite Kanal (11, 11') und der Freischnitt (9) mindestens die dreifache, vorzugsweise die fünffache Dicke des inneren Klebebereiches (7) hat und daß der zweite Kanal (11, 11') und der Freischnitt (9) dieselbe Dicke haben.

13. Verbundener Körper nach einem der Ansprüche 1 bis 12, dadurch gekennzeichnet, daß der verbundene Körper ein Positioniertisch ist.

14. Verbundener Körper nach Anspruch 13, dadurch gekennzeichnet, daß der Positioniertisch in einem optischen Gerät eingebaut ist, welches bei einer Wellenlänge kleiner als 400 nm arbeitet.

15. Verbundener Körper nach Anspruch 14, dadurch gekennzeichnet, daß das optische Gerät ein Mikroskop ist.
